**Europäisches Patentamt**

**European Patent Office**

**Office européen des brevets**

(11) Veröffentlichungsnummer: **0 218 950**
**A2**

## (12) EUROPÄISCHE PATENTANMELDUNG

(21) Anmeldenummer: **86112989.8**

(22) Anmeldetag: **20.09.86**

(51) Int. Cl.⁴: **C 01 B 21/28**
**B 01 J 15/00**

(30) Priorität: **12.10.85 DE 3536450**

(43) Veröffentlichungstag der Anmeldung:
**22.04.87 Patentblatt 87/17**

(84) Benannte Vertragsstaaten:
**DE FR GB NL**

(71) Anmelder: **L. & C. Steinmüller GmbH**
**Postfach 10 08 55/10 08 65 Fabrikstrasse 1**
**D-5270 Gummersbach 1(DE)**

(72) Erfinder: **Beckesch, Günther**
**Nösnerland 28**
**D-5276 Wiehl 3(DE)**

(72) Erfinder: **Weck, Herbert**
**Kölner Strasse 19**
**D-5882 Kierspe(DE)**

(74) Vertreter: **Carstens, Wilhelm, Dipl.-Phys.**
**L. & C. Steinmüller GmbH Patentabteilung Postfach 10 08**
**55/10 08 65**
**D-5270 Gummersbach 1(DE)**

(54) **Wärmetauscher für den Zusammenbau mit einer Brennerhaube eines Kontaktreaktors.**

(57) Bei einem Wärmetauscher für den Zusammenbau mit einer Brennerhaube eines Kontaktreaktors, insbesondere Dünnschichtkontaktreaktors zur Ammoniakverbrennung, mit einem Druckbehälter (1) einschließlich eines zylindrischen Mantelabschnittes, eines Bodenabschnittes und eines Austrittsszutzens für das Produktgas, mindestens einer Verdampfer (8)- und einer Überhitzerheizfläche (9), die zusammen von einer zylindrischen, gasdichten Verkleidung umgeben sind, einer Mantelkühlung und mit Eintrittsverteilern und Sammlern (E, A), sowie durch die Behälterwandung geführte Verbindungsrohre (V) zu einem externen System, insbesondere La-Mont-System, für die Heizflächen und die Mantelkühlung ist erfindungsgemäß vorgesehen, daß alle Verteiler (E1, E2, E3) und Sammler (A1, A2, A3) in dem Druckbehälter (1) unterhalb der Heizflächen (8, 9) angeordnet sind und deren Verbindungsrohre (VE1, VE2, VE3, VA1,VA2) parallel zur Achse der Druckbehälters (1) durch den Bodenabschnitt 3 geführt sind.

Fig. 1.

EP 0 218 950 A2

L. & C. Steinmüller GmbH    5270 Gummersbach, den 18.09.1986
Postfach 10 08 55/10 08 65                    0218950

Stichwort: "NH$_3$-Wärmetauscher"


Patentanmeldung


Wärmetauscher für den Zusammenbau mit
einer Brennerhaube eines Kontaktreaktors


Die Erfindung betrifft einen Wärmetauscher für den
Zusammenbau mit einer Brennerhaube eines
Kontaktreaktors, insbesondere Dünnschichtkontaktreaktors
zur Ammoniakverbrennung, mit einem Druckbehälter
einschließlich eines zylindrischen Mantelabschnittes,
eines Bodenabschnittes und eines Austrittsszutzens für
das Produktgas, mindestens einer Verdampfer- und einer
Überhitzerheizfläche, die zusammen von einer
zylindrischen, gasdichten Verkleidung umgeben sind,
einer Mantelkühlung und mit Eintrittsverteilern und
Sammlern, sowie durch die Behälterwandung geführte
Verbindungsrohre zu einem externen System, insbesondere
La-Mont-System, für die Heizflächen und die
Mantelkühlung.

Ein solcher Wärmetauscher ist aus dem Prospekt der
Anmelderin "Process Engineering Equipment" (1976) Seiten
16 und 17 bekannt. Wie insbesondere aus den Abbildungen
auf Seite 17 zu entnehmen ist, befinden sich bei dem
bekannten Wärmetauscher oder Abhitzekessel die
Eintrittsverteiler für die Mantelkühlung und der Sammler
der Verdampferheizfläche auf der Außenseite des
Druckbehälters. Dies bedeutet, daß die Behälterwandung
mit einer entsprechenden Anzahl von Öffnungen versehen

./.

ist, und daß somit die bekannte Konstruktion
fertigungstechnisch sehr aufwendig ist und die
außenliegenden Sammler und die von diesen ausgehenden
Einzelrohre erheblich zum Gesamtdurchmesser des
Wärmetauschers beitragen. Bei der bekannten Konstruktion
ist darüberhinaus die Fertigung von Heizflächen und
Sammlern von der Fertigung des Druckbehälters selbst
abhängig, denn die außenliegenden Sammler können mit den
ihnen zugeordneten Heizflächen erst verbunden werden,
wenn der Behälter selbst fertiggestellt ist.

Es ist daher die Aufgabe der vorliegenden Erfindung,
einen Wärmetauscher anzugeben, bei dem die Fertigung der
Heizflächen und ihre Verbindung mit den Verteilern und
Sammlern unabhängig von der Fertigung des Behälters
erfolgen kann, und zugleich der Außendurchmesser des
Wärmetauschers im wesentlichen nur von dem Durchmesser
des Druckbehälters bestimmt wird.

Diese Aufgabe wird dadurch gelöst, daß alle Verteiler
und Sammler in dem Druckbehälter unterhalb der
Heizflächen angeordnet sind, und deren Verbindungsrohre
parallel zur Achse des Druckbehälters durch den
Bodenabschnitt geführt sind.

Durch diese Konstruktion ist sichergestellt, daß die
Heizflächen zusammen mit den ihnen zugeordneten
Verteilern und Sammlern zu einer Einheit vorgefertigt
werden können und zwar unabhängig von der Fertigung des
Behälters und als eine Baugruppe in den Behälter
einsetzbar und aus diesem herausziehbar sind.

Vorzugsweise bestehen der Verteiler und der Sammler für
die Verdampferheizfläche aus mindestens zwei
Einzelabschnitten, um eine gleichmäßige Beaufschlagung
bzw. Abfuhr zu erreichen.
Um die Konstruktion der Baugruppe zu vereinfachen und um
Platz für den Verteiler und den Sammler der nicht zu der vorstehend genannten Baugruppe gehörenden Mantelkühlung
zu schaffen, ist es zweckmäßig, wenn die der Baugruppe
zuzuordnenden Verteiler, Sammler und ihre
Verbindungsrohre verschiedenen Teilkreisen zugeordnet
sind.

Vorzugsweise sind die Verbindungsrohre durch von sich
parallel zur Behälterachse in das Behälterinnere
hineinerstreckende an sich bekannte Bunde geführt und im
Behälterinneren mit diesen verschweißt.

Aus dem vorstehend genannten Prospekt ist ein
Wärmetauscher der im Oberbegriff des Anspruches 1
genannten Art bekannt, der zusätzlich mit einer
unterhalb der Verdampfer- und der Überhitzerheizfläche
liegenden, vorzugsweise gasdicht umkleideten
Vorwärmheizfläche mit zugeordnetem Verteiler und Sammler
und Verbindungsrohren und mit einem konisch eingezogenen
Druckbehälter bekannt.

Dieser Wärmetauscher ist erfindungsgemäß weiterhin so
gestaltet, daß der Bodenabschnitt aus einem konischen
Übergangsstück, einem daran anschließenden Zylinderstück
und einem das Zylinderstück abschließenden Bodenstück
besteht, und die Vorwärmheizfläche im wesentlichen in
dem Bodenabschnitt angeordnet ist und, daß ihre
Verbindungsrohre sich koaxial zur Behälterachse durch
das Bodenteil erstrecken.

Beim  Zusammenbau eines solchen Wärmetauschers treten
dieselben Vorteile auf. Zunächst wird die
Vorwärmheizfläche mit zugeordnetem Verteiler und Sammler
als Baugruppe vorgefertigt und dann vor Einbau der
Verdampfer- und Überhitzerbaugruppe in den Druckbehälter
eingebracht.

Hierbei ist es zweckmäßig, daß das Zylinderstück des
Bodenabschnittes durch eine Bolzenverbindung in zwei

.⁄.

0218950

Teile geteilt ist.

Das konische Übergangsstück dient nicht nur der
Optimierung der Anströmung der Vorwärmheizfläche,
sondern ist auch in besonderer Weise für ein Aufstellen
des üblicherweise aufrecht stehenden Druckbehhälters
geeignet. Zu diesem Zwecke ist es von Vorteil, wenn der
Druckbehälter über eine an dem konischen Übergangsstück
angreifende Standzarge abgestützt ist.

In einigen Anwendungsfällen ist es auch üblich, den
Wärmetauscher mit einem Gas-Gas-Kühler derart
zusammenzuschalten, daß das Produktgas, das Wärme an die
Verdampfer- und die Überhitzerheizfläche abgegeben hat,
aus dem Druckbehälter heraus und dem externen
Gas-Gas-Wärmetauscher zugeführt wird. Für einen solchen
besonderen Einsatzzweck ist nach einer bevorzugten
Ausführungsform der Erfindung vorgesehen, daß das der
Verdampfer- und der Überhitzerheizfläche zugeordnete
Ende der Vorwärmheizfläche durch einen Umkehrboden
verschlossen ist, daß oberhalb der Vorwärmheizfläche im
Druckbehälter mindestens ein Auslaßstutzen für das
teilgekühlte Produktgas vorgesehen ist und daß unterhalb
des offenen anderen Endes der Vorwärmheizfläche im
Bodenabschnitt mindestens ein Einlaßstutzen für das
weiter abgekühlte Produktgas vorgesehen ist und daß in
der Vorwärmerheizfläche ein mit dem Auslaßstutzen
verbundenes Standrohr vorgesehen ist, dessen freies Ende
sich in der Nähe des Umkehrbodens befindet.

Bei allen beschriebenen Ausführungsformen ist es
besonders zweckmäßig, wenn die Heizflächen auf an der
Behälterinnenwandung befestigten Pratzen gelagert sind.
Beim angezogenen Stand der Technik, Seite 17, Bild links
unten sind die Verdampfer- und Überhitzerheizflälchen
auf quer durch den Druckbehältermantel geführten Trägern
gelagert.

./.

Da der Wärmetauscher vorzugsweise in einem La-Mont-Prozeß eingesetzt wird, sind die Verteiler und/oder Sammler als Düsensammler ausgelegt. Im übrigen erfolgt die Einschaltung in den Wasser-Dampf-Kreislauf vorzugsweise gemäß dem auf Seite 17 oben dargestellten Schaltbild, auf das hier ausdrücklich Bezug genommen wird.

Der vorstehend beschriebene Wärmetauscher eignet sich nicht nur für den Einsatz zusammen mit einem Dünnschichtkontaktreaktor zur Ammoniakverbrennung, sondern auch zur Herstellung von Formaldehyd, bei dem in ähnlicher Weise Methanol in nur wenige Millimeter dicken Schichten von Kontaktmaterial zu Formaldehyd dehydriert wird. Der in der Beschreibung und in den Ansprüchen verwendete Ausdruck "Brennerhaube" umfaßt auch Hauben, die für diesen Prozeß erforderlich sind, d.h. die Haube könnte auch als "Reaktionshaube" bezeichnet werden.

Die Erfindung soll nun in zwei Ausführungsformen anhand der beigefügten Figuren näher erläutert werden. Es zeigen

Figur 1    einen erfindungsgemäßen Wärmetauscher mit Verdampfer und Überhitzer,

Figur 2    einen Schnitt längs der Linie II-II in Figur 1,

Figur 3    eine Ausführungsform mit Verdampfer, Überhitzer und Vorwärmer und

Figur 4    eine Ausführungsform mit Verdampfer, Überhitzer und Vorwärmer für den Einsatz in Verbindung mit einem externen Gas-Gas-Wärmetauscher.

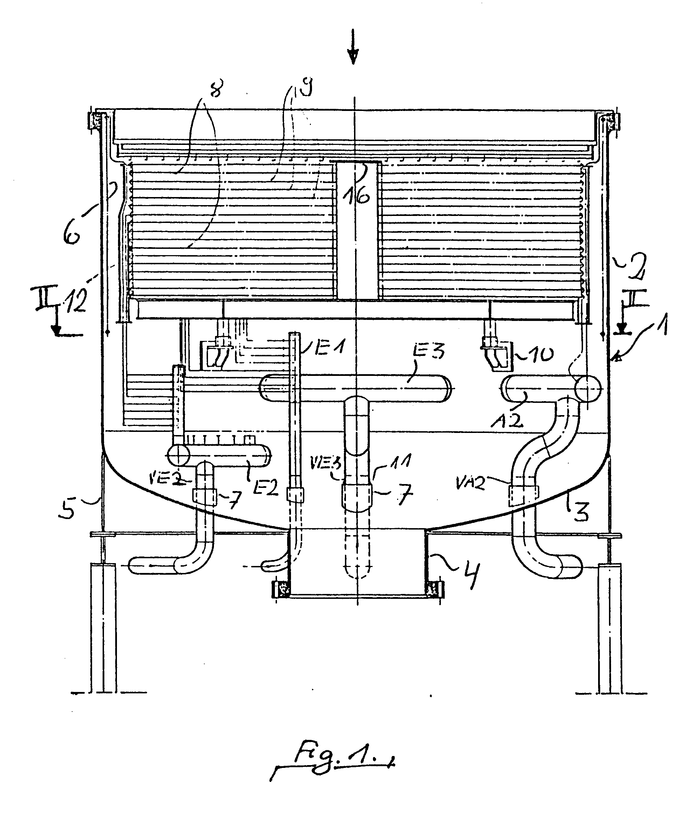

In der Figur 1 ist ein Wärmetauscher für einen Dünnschichtkontaktreaktor zur Ammoniakverbrennung dargestellt, auf dessen oberes Ende eine nicht gezeigte Brennerhaube aufgesetzt wird. Der Wärmetauscher weist einen Druckbehälter 1 mit einem Mantelabschnitt 2 und

./.

einem Bodenabschnitt 3 auf, wobei der Bodenabschnitt mit einem mittig angeordneten Auslaßstutzen 4 für das Produktgas versehen ist. Der Druckbehälter ist über eine Zargenanordnung 5 abgestzützt.

Dem Mantelabschnitt 2 ist eine aus Rohren aufgebaute Mantelkühlung 6 zugeordnet, die über einen Einlaßverteiler E1 gespeist wird und aus der über einen Sammler A1 Wasser abgezogen wird. Die zugeordneten Verbindungsrohre VE1 und VA1 sind parallel zur Behälterachse jeweils durch einen mit dem Boden 3 verbundenen und sich in das innere des Behälters hinein erstreckenden Bund 7 geführt und im Behälterinneren mit diesem verschweißt.

In diesem Behälter ist eine Verdampferheizfläche 8 und eine Überhitzerheizfläche 9 angeordnet, in die von oben das beispielsweise 800° C heiße Produktgas eintritt. Wie üblich sind Verdampferheizfläche 8 und Überhitzerheizfläche 9 in einer Baugruppe zusammengefaßt.

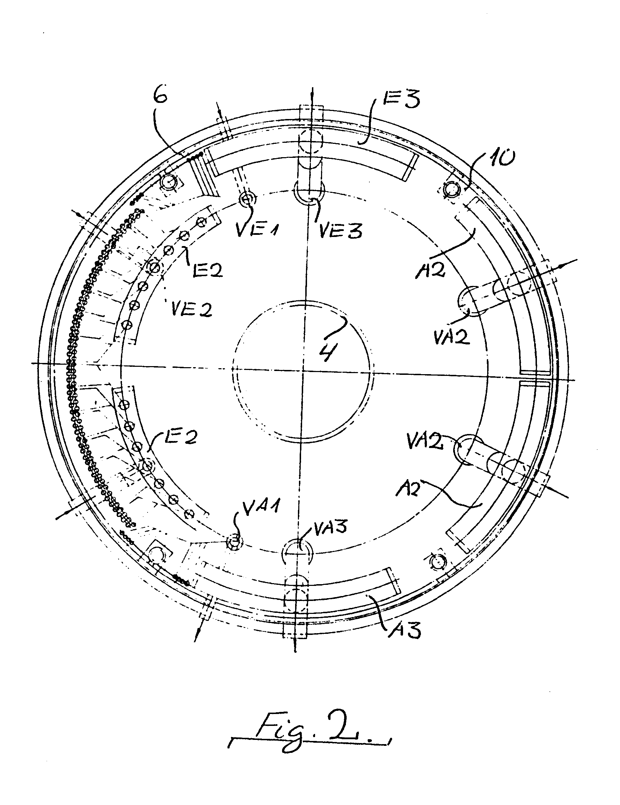

Der Verdampferheizfläche sind zwei Eintrittsverteiler E2 zugeordnet, die auf demselben Teilkreis liegen wie der Einlaßverteiler E1 und der Sammler A1. Die Verteiler E2 sind in der aus den Figuren 1 und 2 ersichtlichen Weise mit der Verdampferheizfläche 8 verbunden. Die Verbindungsrohre VE2 sind ebenfalls parallel zur Behälterachse durch Bunde 7 nach außen geführt.

Weiterhin sind der Verdampferheizfläche 2 gekrümmte Sammler A2 zugeordnet, deren Verbindungsrohre VA2 parallel zur Behälterachse durch Bunde 7 nach außen geführt sind. Zwischen dem den Behälterbodenabschnitt durchsetzenden geraden Verbindungsrohrabschnitt und dem Sammler sind die Verbindungsrohre gekrümmt ausgebildet.

Auf demselben außenliegenden Teilkreis wie die Sammler A2

./.

liegt ein gekrümmter Eintrittsverteiler E3 für die
Überhitzerheizfläche 9 und ein Sammler A3, deren
Verbindungsrohre VE3 und VA3 durch den Boden geführt
sind. Alle Verteiler und Sammler liegen unterhalb der
Baugruppe der Heizflächen 8 und 9.

Verdampferheizfläche 8 und Überhitzer 9 sind auf Pratzen
10 gelagert, die mit der Behälterinnenwandung verbunden
sind.

Wie aus der Figur 2 ersichtlich ist, erfolgt die
Verbindung zwischen dem Einlaßverteiler E1 und der
Mantelkühlung und dem Sammler A1 in Lückenbereichen, so
daß nach Anbringen der Mantelkühlung 6 und des
Verteilers E1 und des Sammlers A1 eine aus den
Heizflächen 8 und 9 den Eintrittsverteilern E2 und E3
und den Sammlern A2 und A3 bestehenden Baugruppe unter
Durchgriff der Verbindungsrohre durch die Bunde 7 in den
Druckbehälter abgesenkt werden kann, bis die Baugruppe
auf den Pratzen 10 aufliegt. Danach werden im
Behälterinneren die Verbindungsrohre mit den
Stirnflächen der Bunde verschweißt, wie dies in der
Figur 1 am Beispiel des Verbindungsrohres VE2 durch die
Schweißung 11 dargestellt ist. Die Unterbaugruppe aus
den Heizflächen 8 und 9 ist von einer gasdichten
Umkleidung 12 umgeben.

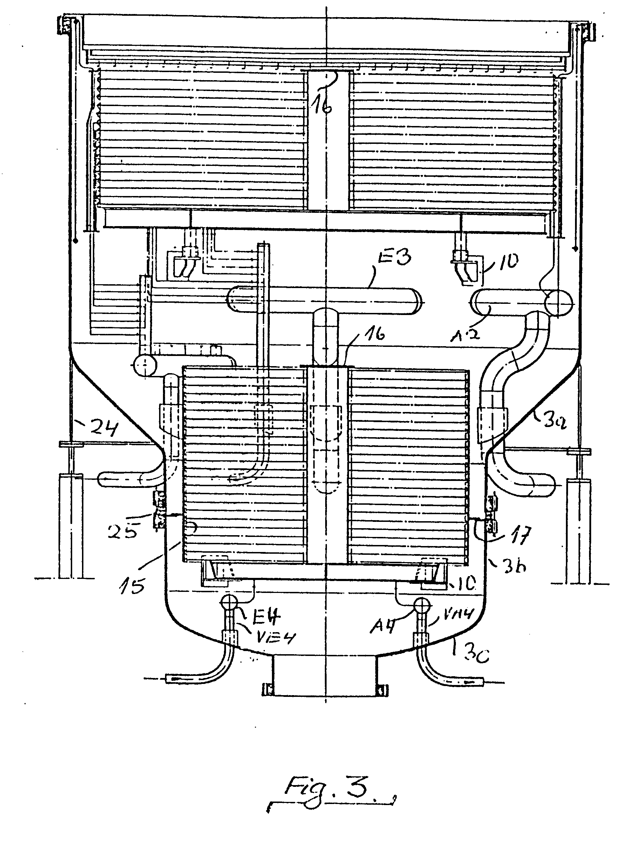

Bei der in der Figur 3 gezeigten Ausführungsform weist
der Bodenabschnitt 3 ein konisches Übergangsstück 3a,
einen Zylinderteil 3b und einen Boden 3c auf. In dem
Bodenabschnitt ist eine Vorwärmheizfläche 13 mittels
Pratzen 14 abgestützt, die ebenfalls von einer
gasdichten Verkleidung 15 umgeben ist. Wie der mittlere
Freiraum der Verdampfer- Überhitzerbaugruppe 8/9 ist
auch der entsprechende Freiraum der Vorwärmheizfläche 13
durch je eine Platte 16 verschlossen, so daß das
Produktgas nur die eigentlichen Heizflächen durchströmt.

Eine gasdichte Sperre 17 ist zwischen der Innenwandung des Bodenabschnittes 3 und der Verkleidung 15
vorgesehen.

Die Vorwärmheizfläche 13 wird über einen
Eintrittsverteiler E4 und einen Sammler A4 beaufschlagt,
deren Verbindungsrohre VE4 und VA4 ebenfalls über Bunde
7 parallel zur Behälterachse durch den Boden 3c geführt
sind.

Auch bei dieser Ausführungsform können Vorwärmheizfläche
13 und Verdampferheizfläche 8 und Überhitzerheizfläche 9
zusammen mit denen ihnen zugeordneten
Eintrittsverteilern und Sammlern unabhängig von der
Fertigung des Behälters als Baugruppen gefertigt und
nacheinander in den Druckbehälter eingebracht werden. In
vergleichbarer Weise können die Heizflächenpaktete mit
Verteiler und Sammler für Reparaturen herausgezogen
werden.

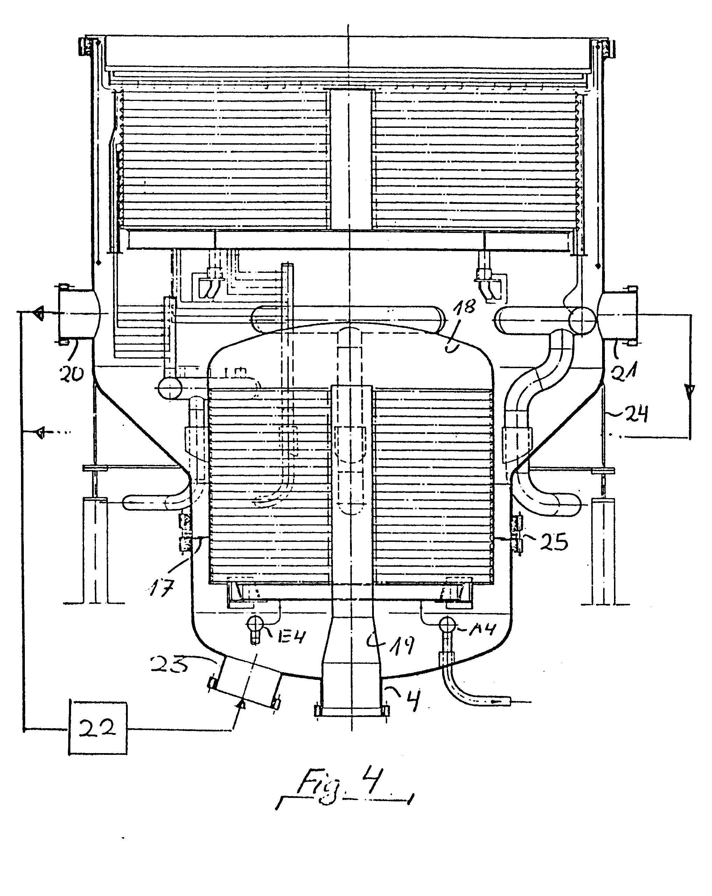

Die Ausführungsform gemäß Figur 4 ist der
Ausführungsform gemäß Figur 3 insoweit vergleichbar, als
eine Vorwärmheizfläche 13 vorgesehen ist. Das Ende der
Vorwärmheizfläche 13, das den Heizflächen 8/9 zugeordnet
ist, ist durch einen gewölbten Umkehrboden 18
verschlossen. In der Mitte der Vorwärmheizfläche ist ein
Standrohr 19 angeordnet, dessen eines Ende mit dem
Stutzen 4 verbunden ist und dessen anderes Ende sich in
der Nähe des Umkehrbodens öffnet.

Der Mantelabschnitt 2 des Druckbehälters ist mit zwei
gegenüber liegenden Auslaßstutzen 20 und 21 verbunden,
aus denen das durch die Heizflächen 8/9 abgekühlte
Produktgas abgezogen und einem nur schematisch
dargestellten Gas-Gas-Wärmetauscher 22 zugeführt wird.
Das in dem Gas-Gas-Wärmetauscher 22 abgekühlte Gas wird
durch mindestens einen Stutzen 23 in dem Boden 3c dem
Vorwärmer 13 zugeführt und durchströmt den Vorwärmer 13,
wird am Umkehrboden umgelenkt und tritt von oben in das

./.

Standrohr 19 ein. Bei dieser Ausführungsform kann somit die Vorwärmheizfläche 13 wegen des Umkehrbodens 18 getrennt von den anderen Heizflächen 8 und 9 beaufschlagt werden.

Die Teilkreise für die Verbindungsrohre V können so gelegt werden, daß der Wärmetauscher baukastenartig aufgebaut werden kann, je nach dem, ob er mit Vorwärmer oder ohne Vorwärmer gefertigt wird, solange im inneren Teilkreis Raum für die Vorwärmheizfläche mit oder ohne Umkehrboden verbleibt.

Bei den Ausführungsformen gemäß Figuren 3 und 4 wird der Druckbehälter vorzugsweise durch eine an dem konischen Übergangsstück 3a angreifende Standzargenanordnung 24 abgestützt.

Bei diesen Ausführungsformen ist es weiterhin sinnvoll, wenn das Zylinderstück zweiteilig ausgebildet ist, und die beiden Teile durch eine Bolzenverbindung miteinander verbunden sind.

L. & C. Steinmüller GmbH    5270 Gummersbach, den 29.89.1986
Postfach 10 08 55/10 08 65

Stichwort: "NH$_3$-Wärmetauscher"

‒ 1 ‒

## Patentansprüche

1. Wärmetauscher für den Zusammenbau mit einer
   Brennerhaube eines Kontaktreaktors, insbesondere
   Dünnschichtkontaktreaktors zur Ammoniakverbrennung,
   mit einem Druckbehälter einschließlich eines
   zylindrischen Mantelabschnittes, eines
   Bodenabschnittes und eines Austrittsszutzens für das
   Produktgas, mindestens einer Verdampfer- und einer
   Überhitzerheizfläche, die zusammen von einer
   zylindrischen, gasdichten Verkleidung umgeben sind,
   einer Mantelkühlung und mit Eintrittsverteilern und
   Sammlern, sowie durch die Behälterwandung geführte
   Verbindungsrohre zu einem externen System,
   insbesondere La-Mont-System, für die Heizflächen und
   die Mantelkühlung, d a d u r c h   g e k e n n z e
   i c h n e t ,   daß alle Verteiler (E1, E2, E3) und
   Sammler (A1, A2, A3) in dem Druckbehälter (1)
   unterhalb der Heizflächen (8, 9) angeordnet sind und
   deren Verbindungsrohre (VE1, VE2, VE3, VA1, VA2)
   parallel zur Achse des Druckbehälters (1) durch den
   Bodenabschnitt 3 geführt sind.

2. Wärmetauscher nach Anspruch 1, d a d u r c h   g e -
   k e n n z e i c h n e t ,   daß der Verteiler und der
   Sammler für die Verdampferheizfläche (8) aus
   mindestens zwei Einzelabschnitten (E2, E2; A2, A2)
   besteht.

3. Wärmetauscher nach Anspruch 1, d a d u r c h   g e -
   k e n n z e i c h n e t ,   daß die Verteiler und
   Sammler von Verdampferheizfläche (8) und          ./.

Überhitzerheizfläche (9) und ihre Verbindungsrohre (V) verschiedenen Teilkreisen zugeordnet sind.

4. Wärmetauscher nach einem der Ansprüche 1 bis 3, d a - d u r c h   g e k e n n z e i c h n e t , daß die Verbindungsrohre (V) durch von sich parallel zur Behälterachse in das Behälterinnere hineinerstreckende an sich bekannte Bunde (7) geführt und im Behälterinneren mit diesen verschweißt (11) sind.

5. Wärmetauscher nach einem der Ansprüche 1 bis 4 mit einer unterhalb der Verdampfer- und der Überhitzer heizfläche liegenden, vorzugsweise gasdicht umkleideten Vorwärmheizfläche mit zugeordnetem Verteiler und Sammler und Verbindungsrohren und mit einem konisch eingezogenen Druckbehälter, d a - d u r c h   g e k e n n z e i c h n e t , daß der Bodenabschnitt (3) aus einem konischen Übergangsstück (3a), einem daran anschließenden Zylinderstück (3b) und einem das Zylinderstück abschließenden Bodenstück (3) besteht und die Vorwärmheizfläche (13) im westenlichen in dem Bodenabschnitt angeordnet ist und daß ihre Verbindungsrohre (VE4-VA4) sich koaxial zur Behälterachse durch das Bodenstück (3c) erstrecken.

6. Wärmetauscher nach Anspruch 5 , d a d u r c h   g e k e n n z e i c h n e t , daß das Zylinderstück (3b) des Bodenabschnittes (3) durch eine Bolzenverbindung (24) in zwei Teile geteilt ist.

7. Wärmetauscher nach Anspruch 5 oder 6, d a d u r c h   g e k e n n z e i c h n e t , daß der Druckbehälter (1) über eine an dem konischen Übergangsstück angreifende Standzarge (24) abgestützt ist.

8. Wärmetauscher nach einem der Ansprüche 5 bis 7, d a - durch gekennzeichnet, daß der
Verdampfer (8) und der Überhitzerheizfläche (9)
zugeordnete Ende der Vorwärmheizfläche (13) durch
einen Umkehrboden (18) verschlossen ist, daß oberhalb
der Vorwärmheizfläche (13) im Druckbehälter
mindestens ein Auslaßstutzen (20: 21) für das
teilgekühlte Produktgas vorgesehen ist und daß
unterhalb des offenen anderen Endes der
Vorwärmheizfläche (13) im Bodenabschnitt mindestens
ein Einlaßstutzen (23) für das weiter abgekühlte
Produktgas vorgesehen ist und daß in der
Vorwärmheizfläche (13) ein mit dem Auslaßstutzen (4)
verbundenes Standrohr (19) vorgesehen ist, dessen
freies Ende sich in der Nähe des Umkehrbodens
befindet.

9. Wärmetauscher nach einem der Ansprüche 1 bis 8, d a -
   d u r c h   g e k e n n z e i c h n e t , daß die
   Heizflächen (8, 9: 13) auf an der Behälterinnenwandung
   befestigten Pratzen (10: 14) gelagert sind.

Fig. 1.

2/4

0218950

Fig. 2.

Fig. 3.

Fig_4_